**Europäisches Patentamt**

(19) **European Patent Office**

**Office européen des brevets**

(11) Veröffentlichungsnummer: **0 063 205**
**B1**

(12) # EUROPÄISCHE PATENTSCHRIFT

(45) Veröffentlichungstag der Patentschrift:
**14.08.85**

(51) Int. Cl.⁴: **H 01 S 3/30**

(21) Anmeldenummer: **82100503.0**

(22) Anmeldetag: **26.01.82**

(54) **Laservorrichtung.**

(30) Priorität: **11.04.81 DE 3114815**

(43) Veröffentlichungstag der Anmeldung:
**27.10.82 Patentblatt 82/43**

(45) Bekanntmachung des Hinweises auf die Patenterteilung:
**14.08.85 Patentblatt 85/33**

(84) Benannte Vertragsstaaten:
**BE CH DE FR GB IT LI NL SE**

(56) Entgegenhaltungen:
**US - A - 3 536 931**
**US - A - 3 668 420**

**APPLIED OPTICS, Band 8, Nr. 8, August 1969, Seiten 1559-1566, New York, USA, N. GOLDBLATT: "Stimulated brillouin scattering"**
**IEEE JOURNAL OF QUANTUM ELECTRONICS, Band 15, Nr. 9, September 1979, Seiten 85D, 86D, New York, USA, C. LIN et al.: "A tunable near-infrared fiber raman oscillator in the 1,1- to 1,3-micron region"**

**Die Akte enthält technische Angaben, die nach dem Eingang der Anmeldung eingereicht wurden und die nicht in dieser Patentschrift enthalten sind.**

(73) Patentinhaber: **ELTRO GmbH Gesellschaft für Strahlungstechnik, Kurpfalzring 106 Postfach 10 21 20, D-6900 Heidelberg 1 (DE)**

(72) Erfinder: **Bess, Günter, Mozartstrasse 19a, D-6904 Eppelheim (DE)**
Erfinder: **Ruger, James, Dr., Silbergasse 33, D-6921 Hoffenheim (DE)**

(74) Vertreter: **Muschka, Wilhelm, Dipl.-Ing., Eltro GmbH Gesellschaft für Strahlungstechnik Kurpfalzring 106 Postfach 10 21 20, D-6900 Heidelberg 1 (DE)**

## Beschreibung

Die Erfindung betrifft eine Laservorrichtung mit einer im 1,5 µm-Bereich liegenden Emission.

Eine solche Laservorrichtung ist aus der US-A-3 668 420 bekannt und ferner Gegenstand der DE-AS 21 44 201. Wie dort näher ausgeführt wird, ist es bisher jedoch nicht gelungen, ein Ramanmedium zur Aussendung von Strahlung hoher Energie mit einer zur Emissionswellenlänge von 1,5 µm gleichen oder annähernd gleichen Wellenlänge anzuregen. Aus der US-A-3 536 931 ist ferner eine Laservorrichtung bekannt, bei der ein Pumplaser eine polarisierte Strahlung erzeugt und zwischen dem Pumplaser und dem ramanaktiven Medium ein Richtungsisolator angeordnet ist.

Die Aufgabe der Erfindung so wie sie in den Ansprüchen gekennzeichnet ist wird in der Schaffung einer Möglichkeit gesehen, die im Wellenlängenbereich von etwa 1,06 bis 1,08 µm liegende Strahlung eines gattungsgemässen Lasers in eine solche des Wellenlängenbereichs von 1,54 bis 1,57 µm mit hoher Konversionseffizienz umzuwandeln. Der Resonator des Riesenimpulslasers enthält ein polarisierte Strahlung erzeugendes Medium, dessen ausgesandte Strahlung über einen optischen Richtungsisolator in das aus stark komprimiertem Gas bestehende ramanaktive Medium des weiteren Resonators gelangt. Auf diese Weise gelingt durch Anregen des ramanaktiven Mediums eine aus Gründen des Augenschutzes wichtige Frequenzverschiebung der Pumpstrahlung um den Wert 2914 cm$^{-1}$.

Vorteilhaft ist es beispielsweise, dass als Medium zur Erzeugung polarisierter Strahlung ein Nd: Glas- oder ein Nd: AY10$_3$- oder ein Nd: YAG-Laserstab Verwendung findet. Nd: YA10$_3$ besitzt eine Wellenlänge von 1,072 oder 1,079 µm, die somit gegenüber derjenigen von ND: YAG mit 1,06 µm leicht verschoben ist, während die Effizienzwerte gleich sind. Seine Strahlung ist bereits durch die Kristalleigenschaften streng linear polarisiert, wohingegen bei ND: YAG-Kristallen keine Polarisation der Strahlung erkennbar ist. Darüberhinaus ist es auch von Vorteil, dass das ramanaktive Medium beispielsweise aus Methangas besteht, das auf einen Druck von grösser als 40 Bar komprimiert ist und in einer Zelle mit einer optischen Weglänge von mindestens 10 cm untergebracht ist. Erst solche Druckwerte führen bei zunehmender Baulänge der Methanzelle zu Konversionseffizienzwerten zwischen etwa 20 und 40%.

Die Erfindung sieht ferner vor, dass sich der Richtungsisolator in Strahlenverlaufsrichtung aus einem im Brewsterwinkel in den Strahlengang eingesetzten Dünnfilm-Polarisator und einer senkrecht zum Strahlengang ausgerichteten λ/4-Wellenplatte zusammensetzt. Dieser Isolator lässt linear polarisierte Strahlung des Pumplasers passieren und sperrt vor allem die von dem ramanaktiven Medium rückgestrahlte sogenannte Brillouin-Streustrahlung, die eine Gefahr für die optischen Glieder des Lasers darstellt, weil die durch sie hervorgerufenen Beschädigungen ein schnelles Abfallen der Ausgangsenergie des Pumplasers zur Folge hätten. Die verbleibende Energie würde dann nicht mehr ausreichen, um die Schwelle des ramanaktiven Mediums zu überschreiten.

Was die Anordnung der einzelnen optischen Glieder des Ramanresonators anbetrifft, so hat es sich in der Praxis beispielsweise als sinnvoll erwiesen, dass derselbe in Richtung Strahlenauskopplung aus einem Ramanspiegel, einem Fokussierelement, dem mit Ein- und Austrittsfenster versehenen ramanaktiven Medium – einer sogenannten Methanzelle –, einer Kollimatorlinse und einem dichroitischen Spiegel besteht. Zweckmässigerweise besitzt der Ramanspiegel hohe Transmission für die jeweilige Pumpwellenlänge und hohe Reflexion für die erzeugte Ramanwellenlänge.

In vorstehendem Zusammenhang ist es auch bedeutungsvoll, dass das Ein- und das Austrittsfenster sowie das Fokussierelement und die Kollimatorlinse unmittelbar vor dem Ein- bzw. nach dem Austrittsfenster mit je einem in die Mitte der Methanzelle gelegten Brennpunkt angeordnet sind. Der Brennpunkt in der Methanzelle kann aber auch an jede andere Stelle im Raum zwischen Ein- und Austrittsfenster gelegt werden. Darüberhinaus ist es zweckmässig, dass der dichroitische Spiegel hohe Reflexion für die Zurückhaltung eines Energie-Restanteils der Pumpwellenlänge und hohe Transmission für die Ramanwellenlänge besitzt. Ferner ist der dichroitische Spiegel erfindungsgemäss derart justiert, dass der auftreffende Rest der Strahlung des Riesenimpulslasers derart abgelenkt wird, dass er nicht mehr in den Ramanresonator gelangen kann.

Im folgenden werden an Hand einer Zeichnung Ausführungsbeispiele der Erfindung näher erläutert, wobei die in den einzelnen Figuren einander entsprechenden Teile dieselben Bezugszahlen aufweisen. Es zeigt

Fig. 1 ein Blockschaltbild zur Erläuterung des Prinzips der Erfindung,

Fig. 2 das prinzipielle Blockschaltbild einer erfindunsgemässen Vorrichtung,

Fig. 3 eine detaillierte Schemaskizze der Vorrichtung gemäss Fig. 1.

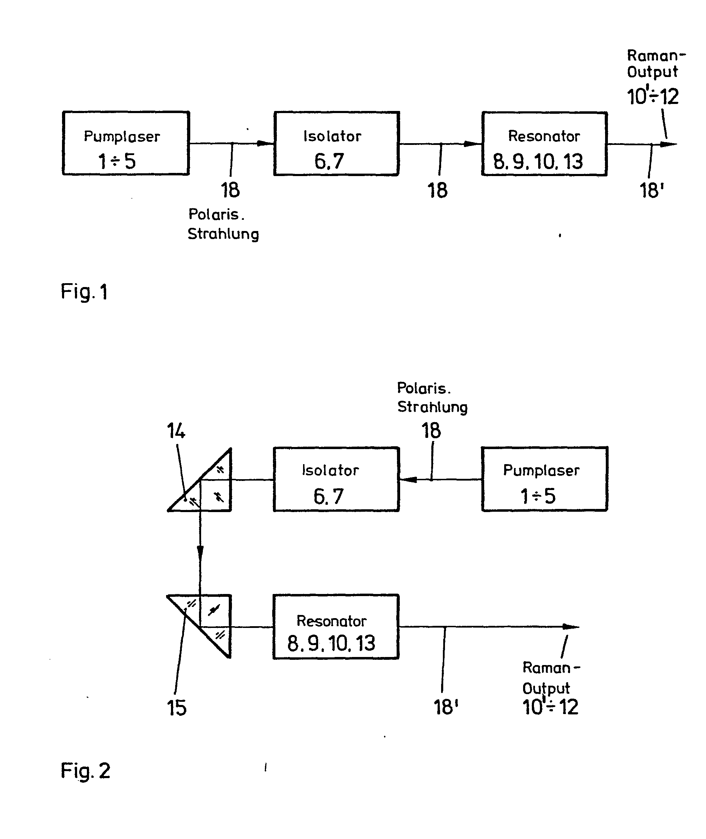

In dem Blockschaltbild der Fig. 1 sind die drei massgeblichen Baugruppen der erfindungsgemässen Vorrichtung in Serie geschaltet.

Es handelt sich hierbei um den Riesenimpulslaser 1 bis 5, der als Pumplaser dient. Dieser Laser sendet polarisierte Strahlung 18 in Richtung des ihm optisch nachgeschalteten Isolators 6, 7, was mit Richtungspfeilen angedeutet ist. Die den Richtungsisolator passierende Strahlung gelangt auf die Methanzelle 13, von der wiederum nur ein bestimmter Anteil über den Output 10' bis 12 ausgekoppelt wird. In der Fig. 2 ist der Strahlengang im Bereich zwischen Isolator und Methanzelle mit Hilfe der zwei Umlenkelemente 14 und 15 um zweimal 90° umgelenkt, so dass er anschliessend in die zur Ausgangsrichtung entgegengesetzte Richtung verläuft. Bei einem anderen, zeichnerisch nicht dargestellten Ausführungsbeispiel kann der Strahlengang auch in einem anderen Bereich gefaltet sein, oder aber er kann in diesem und/oder in einem anderen Bereich auch mehrfach gefaltet sein.

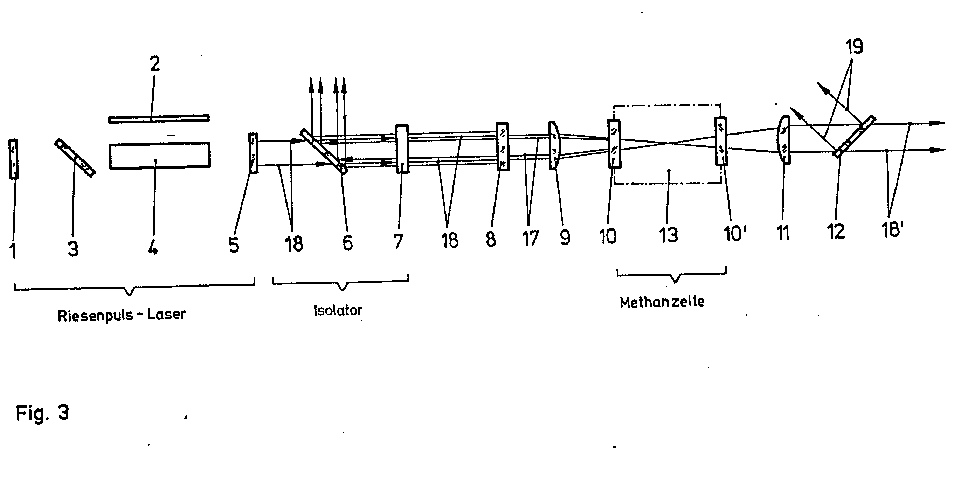

In Fig. 3 sind die drei Baugruppen von Fig. 1 mit ihren Einzelelementen dargestellt. Der Riesenimpulslaser 1 bis 5 besteht dabei aus einem polarisierte Strahlung 18 bzw. 18' erzeugenden Nd: Glas- oder einem Nd: YAG- oder einem Nd: YAlO$_3$-Laserstab 4, der von der zu seiner Längsachse parallel angeordneten Blitzlampe 2 angeregt wird. An der – in Blickrichtung – linken Stirnseite des Laserstabes befindet sich der Resonator-Endspiegel 1 und zwischen diesem und dem Laserstab bedarfsweise der passive Güteschalter 3. Letzterer ist unter dem Brewsterwinkel in den Strahlengang eingefügt und ist bei Verwendung von Nd: YAG-Kristallen erforderlich, bei denen keine Polarisation der Strahlung erkennbar ist. An der gegenüberliegenden Stirnseite befindet sich der Resonator-Auskoppelspiegel 5, über den die Strahlung 1 – in der vorstehend bereits beschriebenen Weise – zunächst auf den Isolator 6, 7 und von diesem auf die Methanzelle 13 gelangt.

Der Richtungsisolator 6, 7 setzt sich aus dem Dünnfilm-Polarisator 6 und der $\lambda$/4-Wellenplatte 7 zusammen, wobei der Polarisator im Strahlengang unter dem Brewsterwinkel eingefügt wurde. Auf dem Weg zur Methanzelle 13 durchläuft die Strahlung 18 noch den Ramanspiegel 8, das in Form einer Linse vorgesehene Fokussierelement 9 und das Eintrittsfenster 10. Das Fokussierelement liegt unmittelbar vor dem Fenster und ist so ausgelegt, dass sein Brennpunkt in der Mitte der Methanzelle zu liegen kommt. Es ist aber auch jeder andere Punkt im Raum zwischen den beiden Ramanzellenfenstern 10 und 10' denkbar. In dem Ramanresonator entsteht Brillouin-Streustrahlung, die in Richtung Pumplaser 1 bis 5 zurückläuft und dort optische Elemente beschädigen kann. Dies wird verhindert durch den Richtungsisolator 6, 7. Die mit den Pfeilen 17 gekennzeichnete Streustrahlung kann noch vor Erreichen des Pumplasers 1 bis 5 und seiner Optiken über den Dünnfilm-Polarisator 6 aus dem bisherigen Strahlengang herausgeführt werden.

Vor der ursprünglichen Pumpstrahlung 18 wird demnach durch das dem Eintrittsfenster 10 gegenüberliegende Austrittsfenster 10' nurmehr der Anteil 18' aus der Methanzelle 13 ausgekoppelt. Die unmittelbar hinter dem Austrittsfenster vorgesehene Kollimatorlinse 11 ist ähnlich dem Fokussierelement 9 so ausgelegt, dass auch ihre Brennebene mit der Mitte der Methanzelle zusammenfällt. Sollte der Brennpunkt irgendwo im Raum zwischen den beiden Ramanzellenfenstern liegen, müssten die Brennweiten von Kollimatorlinse 11 und Fokussierelement 9 entsprechend gewählt werden.

Ihr ist schliesslich noch ein dichroitischer Spiegel oder auch ein entsprechendes Filter 12 optisch nachgeschaltet, die beide eine hohe Reflexion für die Pumpwellenlänge und eine hohe Transmission für die Ramanwellenlänge besitzen.

Wie die Pfeile 19 symbolisieren, soll auf diese Weise ein Rest der Pumpenergie zurückgehalten werden, während der noch verbleibende Ramananteil 18' als Nutzstrahlung verfügbar ist. Die Wellenlänge dieser stimulierten Ramanstrahlung ermittelt sich nach der Gleichung

$$\frac{1}{\lambda_p} - \frac{n}{\lambda_v} = \frac{1}{\lambda_u}$$

wobei

$\lambda_p$ = Pumpwellenlänge
$1/\lambda_v$ = Frequenzverschiebung des Methangases
$n = +1, 2, \ldots$ für Stokesverschiebung
$n = -1, 2, \ldots$ für Antistokesverschiebung
$\lambda_u$ = umgewandelte Wellenlänge

Im vorliegenden Ausführungsbeispiel bestehen Fokussierelement, Fenster und Kollimatorlinse aus selbständigen Bauteilen. Bei einem anderen, zeichnerisch nicht dargestellten Ausführungsbeispiel ist es jedoch auch denkbar, dass diese Elemente zu einer kompakten Baueinheit zusammengefasst sind.

Insgesamt gesehen ergibt sich durch die vorstehend beschriebenen Massnahmen die Möglichkeit, ein Ramanmedium auf vergleichsweise einfache Art bereits in dem für die Augen unschädlichen Wellenlängenbereich anzuregen, in dem später die Emission erfolgt. Dadurch wiederum können die hohen Schutznormen für mit Laserstrahlen arbeitende Entfernungsmesser und Lichtradarsysteme, für die die erfindungsgemässe Vorrichtung in erster Linie gedacht ist, problemlos eingehalten werden.

**Patentansprüche**

1. Laservorrichtung mit einer im 1,5-$\mu$m-Bereich liegenden Emission mit
a) einem Riesenimpulslaser (1 bis 5), dessen Resonator ein von einer Pumplichtquelle anregbares Medium besitzt,
b) einem Ramanresonator (13), der ein ramanaktives Medium besitzt, welches in einer von einem Ein- und Austrittsfenster begrenzten Zelle angeordnet und durch mit Hilfe von Fokussierelementen gebündelter Strahlung des Riesenimpulslasers anregbar ist, und
c) einem dem Ramanresonator (13) in Strahlenverlaufsrichtung optisch nachgeschalteten, bezüglich der Riesenimpulslaser- und der Ramanwellenlänge dichroitischen Spiegel (12), dadurch gekennzeichnet, dass
d) der Resonator des Riesenimpulslasers (1 bis 5) eine polarisierte Strahlung erzeugt,
e) zwischen dem Riesenimpulslaser (1 bis 5) und dem Ramanresonator (13) ein Richtungsisolator (6, 7) angeordnet ist, der sich aus einem im Brewsterwinkel in den Strahlengang eingefügten Dünnfilm-Polisator (6) und einer senkrecht zum Strahlengang ausgerichteten $\lambda$/4-Wellenplatte (7) zusammensetzt,
f) der Strahlengang vor oder hinter dem Richtungsisolator (6, 7) in eine zur Ausgangsrichtung entgegengesetzte Richtung umgelenkt ist und

g) der dichroitische Spiegel (12) derart justiert ist, dass der auftreffende Rest der Strahlung des Riesenimpulslasers derart abgelenkt wird, dass er nicht mehr in den Ramanresonator (13) gelangen kann (19).

2. Vorrichtung nach Anspruch 1, dadurch gekennzeichnet, dass als Medium (3, 4) zur Erzeugung polarisierter Strahlung ein ND: YA10₃-Laserstab verwendet wird und das ramanaktive Medium auf einen Druck von grösser als 40 Bar komprimiert und in einer Zelle mit einer optischen Weglänge von mindestens 10 cm untergebracht ist.

3. Vorrichtung nach Anspruch 1 und 2, dadurch gekennzeichnet, dass ein an der Auskoppelseite des Ramanresonators (13) gelegenes Fokussierelement (11) aus einer Kollimatorlinse besteht und zusammen mit einem dem Ramanresonator optisch vorgeschaltetem Fokussierelement (9) und den Fenstern (10; 10') der Zelle des Ramanresonators (13) doppellinienvergütet ist.

## Revendications

1. Dispositif laser dont l'émission se situe dans la plage de 1,5 µm, comportant

a) un laser déclenché (1 à 5) dont le résonateur renferme un agent susceptible d'être activé par une source lumineuse de pompage,

b) un résonateur Raman (13) contenant un agent actif Raman renfermé dans une cellule limitée par une fenêtre d'entrée et de sortie et susceptible d'être activé par le faisceau du laser déclenché focalisé à l'aide d'éléments de focalisation, et

c) un miroir (12) de type dichroïque quant à la longueur des ondes Raman et du laser déclenché, placé en aval du résonateur Raman (13) dans le champ optique du faisceau, caractérisé en ce que

d) le résonateur du laser déclenché (1 à 5) produit un faisceau polarisé,

e) un isolateur directionnel (6, 7) constitué par un polarisateur à couche mince (6) inséré dans le faisceau sous l'angle d'incidence brewstérienne et par une plaque d'ondes λ/4 (7) orientée perpendiculairement au faisceau, est disposé entre le laser déclenché (1 à 5) et le résonateur Raman (13),

f) le faisceau est dévié dans le sens opposé à sa direction de sortie en amont ou en aval de l'isolateur directionnel (6, 7),

g) le miroir dichroïque (12) est ajusté de manière que le faisceau résiduel du laser déclenché est dévié de telle sorte qu'il ne puisse plus atteindre (19) le résonateur Raman (13).

2. Dispositif selon la revendication 1, caractérisé en ce que l'agent (3, 4) utilisé pour produire un faisceau polarisé est constitué par un tube laser ND: YA10₃ et que l'agent actif Raman est comprimé à une pression supérieure à 40 bars et renfermé dans une cellule ayant une course optique d'au moins 10 cm de long.

3. Dispositif selon la revendication 1 et 2, caractérisé en ce qu'un élément de focalisation (11) situé côté déclenchement du résonateur Raman (13) est constitué par une lentille de collimateur et a subi un double traitement antireflet conjointement avec un élément de focalisation (9) monté dans le champ optique en amont du résonateur Raman et avec les fenêtres (10, 10') de la cellule du résonateur Raman (13).

## Claims

1. A laser device with an emission in the 1.5 µm region, comprising:

a) a giant impulse laser (1 to 5), the resonator of which has a medium which can be activated by a pump light source,

b) a Raman resonator (13) having a Raman-active medium which is arranged in a cavity bounded by an inlet window and an outlet window and can be activated by a beam of the giant impulse laser, which beam is focussed by means of focussing elements, and

c) a mirror (12) which is dichroic with respect to the giant impulse laser and Raman wavelength and is arranged optically behind the Raman resonator (13), viewed in the direction of the beam, characterised in that

d) the resonator of the giant impulse laser (1 to 5) produces a polarized beam,

e) a directional isolator (6, 7) is arranged between the giant impulse laser (1 to 5) and the Raman resonator (13), the isolator being composed of a thin film polarizer (6) inserted in the Brewster angle in the path of the beam and a λ/4 wave plate (7) directed perpendicularly to the path of the beam,

f) the path of the beam is deflected before or after the directional isolator (6, 7) in a direction opposite to the starting direction, and

g) the dichroic mirror (12) is adjusted so that the incident remainder of the beam of the giant impulse laser is deflected in such a manner (19) that it can no longer enter the Raman resonator (13).

2. A device according to claim 1, characterised in that the medium (3, 4) used for producing polarized radiation is a ND: YA10₃ laser rod and the Raman active medium is compressed to a pressure greater than 40 bar and accommodated in a cavity having an optical wavelength of at least 10 cm.

3. A device according to claims 1 and 2, characterised in that a focussing element (11) situated on the output side of the Raman resonator (13) comprises a collimator lens and, together with a focussing element (9) arranged optically in front of the Raman resonator and the windows (10, 10') of the cell of the Raman resonator (13), is double line coated.

- $\frac{1}{2}$ -

Raman-
Output
$10' \div 12$

| Pumplaser<br>$1 \div 5$ | → | Isolator<br>6,7 | → | Resonator<br>8, 9, 10, 13 | → |
|---|---|---|---|---|---|

18

18

18'

Polaris.
Strahlung

Fig. 1

Polaris.
Strahlung
18

14

| Isolator<br>6, 7 | ← | Pumplaser<br>$1 \div 5$ |
|---|---|---|

| Resonator<br>8, 9, 10, 13 | → |
|---|---|

15

18'

Raman-
Output
$10' \div 12$

Fig. 2

Fig. 3

Riesenpuls - Laser    Isolator    Methanzelle

1  3  4  5  18  6  7  18  8  17  9  10  13  10'  11  12  18'  19  2

0 063 205